# FASCICULE DE BREVET EUROPEEN

(11) **EP 3 898 536 B1**
(45) Date de publication et mention de la délivrance du brevet: **18.10.2023**
(21) Numéro de dépôt: 19842828.6
(22) Date de dépôt: 17.12.2019
(51) Int. Cl.: C03B 37/05

(54) **MACHINE DE FIBRAGE A MAINTENANCE AMÉLIORÉE**
FASERHERSTELLUNGSMASCHINE MIT VERBESSERTER WARTUNG
FIBRE PRODUCING MACHINE WITH IMPROVED MAINTENANCE

(30) Priorité: 19.12.2018 FR 1873401
(43) Date de publication de la demande: 27.10.2021
(73) Titulaire: SAINT-GOBAIN ISOVER, 92400 Courbevoie (FR)
(72) Inventeur: JANKOVSKY, Jiri, 53401 Veliny (CZ); MORIN, Philippe, 50009 Hradec Kralove (CZ)
(74) Mandataire: Saint-Gobain Recherche
(86) Numéro de dépôt international: PCT/FR2019/053103
(87) Numéro de publication internationale: WO 2020/128287

(56) Documents cités:
- EP-A1- 0 439 385
- CN-Y- 2 608 498

## Description

La présente invention est relative au domaine des machines pour la fabrication de la laine minérale.

### ART ANTÉRIEUR

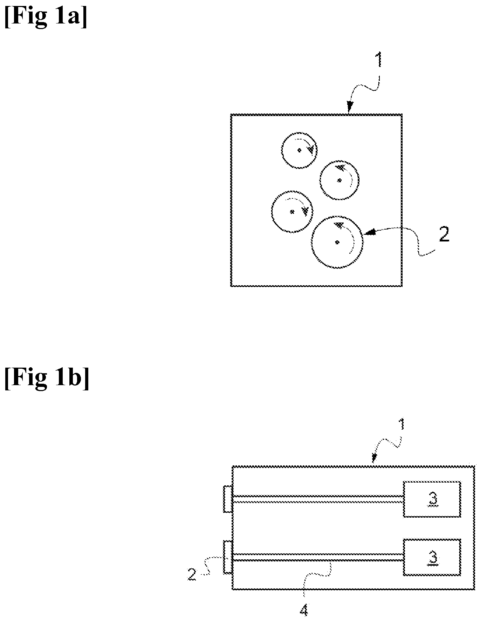

Il est connu, pour la fabrication de la laine minérale, d'utiliser une machine de fibrage de laine minérale par centrifugation libre 1 comme visibles aux figures 1a et 1b. Cette machine de fibrage de laine minérale par centrifugation libre comprend classiquement une série de broches portant chacune une roue de centrifugation ou rotor 2. Les broches sont disposées parallèlement les unes aux autres suivant un assemblage mettant les surfaces périphériques des roues à proximité les unes des autres.

Jusqu'à présent, dans une telle machine de fibrage, les broches sont entraînées en rotation par un moteur 3. Les roulements de la broche sont du type à billes ou à rouleaux. Ils sont lubrifiés par un brouillard d'huile et acceptent généralement des vitesses de rotation de l'arbre 4 de l'ordre de 10000 tours par minute (10000 t/mn).

Plus précisément, les broches sont entraînées en rotation par un moteur via l'utilisation d'un arbre connecteur 4. Cet arbre connecteur est utilisé, non seulement pour faire le lien entre le moteur et la broche portant le rotor mais aussi pour amener le liant utilisé dans la confection de la laine minérale, voire pour amener, faire circuler du liquide de refroidissement des broches.

Or, actuellement chaque arbre est en prise directe avec le moteur soit par vissage de l'arbre connecteur 4 à l'arbre moteur soit par utilisation d'une courroie ou chaine entre l'arbre moteur et l'arbre connecté à la broche. Dans le cas de l'utilisation d'une courroie, l'arbre moteur et l'arbre connecteur sont munis d'une poulie permettant de modifier la démultiplication et de faire tourner l'arbre connecteur plus vite.

il est connu les document EP 0 439 385 et CN 2 608 498 qui décrivent une machine de fibrage de laine minérale par centrifugation libre comprenant un bâti sur lequel est montée au moins une roue de centrifugation, ladite roue étant connecté à un arbre de transmission destinée à la mettre en rotation en transmettant le mouvement de rotation d'un axe de sortie d'un moteur. Il peut être prévu un seul moteur pour faire tourner la totalité des axes.

Ainsi, cette prise directe de l'arbre connecteur avec le moteur implique l'inconvénient d'une maintenance complexe.

En effet, une telle configuration en prise directe oblige l'opérateur de maintenance à désaccoupler l'axe du moteur voire à enlever les poulies et la courroie pour effectuer une maintenance ou une réparation. Or, cette opération est complexe et nécessite du temps et l'obligation de régler de nouveau l'appareil.

De plus, cette prise directe présente aussi l'inconvénient de limiter les possibilités d'augmentation de la vitesse de rotation et donc d'évolutions. En effet, la prise directe des rotors avec les moteurs impliquent que la vitesse maximale des rotors est la vitesse maximale des moteurs. Ainsi, l'augmentation de la vitesse de rotation des rotors ne peut se faire que par le changement de moteur et la mise en place d'un moteur permettant une vitesse de rotation plus élevée. Un tel changement de moteur est coûteux car il nécessite un moteur plus performant. Il est également complexe car il nécessite un changement de moteur, pour chaque rotor.

### RÉSUMÉ DE L'INVENTION

La présente invention se propose donc de fournir une machine de fibrage de laine minérale par centrifugation libre qui résout les inconvénients de l'art antérieur.

A cet effet, l'invention concerne une machine de fibrage de laine minérale par centrifugation libre comprenant un bâti sur lequel est montée au moins une roue de centrifugation, ladite roue de centrifugation étant connectée à un arbre de transmission destiné à la mettre en rotation en transmettant le mouvement de rotation d'un axe de sortie d'un bloc moteur, caractérisée en ce que ladite machine comprend en outre au moins une boite de transmission intermédiaire connectée au moins par une entrée à l'axe moteur et par au moins une sortie à un arbre de transmission, ladite boite de transmission intermédiaire étant agencée pour transmettre le mouvement de rotation de l'axe moteur à l'arbre de transmission.

La présente invention permet avantageusement d'avoir une machine de fibrage de laine de roche ayant une maintenance simplifiée. Effectivement, la présence d'une boite de transmission intermédiaire permet avantageusement de ne pas connecter directement le moteur aux arbres sur lesquels les rotors sont agencés. Ainsi, un changement de courroie ou de pignons se fait en enlevant la boite de transmission intermédiaire sans démonter les arbres de transmission.

Selon un exemple, la machine comprend une pluralité de roues de centrifugation, chaque roue de centrifugation étant connectée à un arbre de transmission, et comprenant une boite de transmission intermédiaire pour chaque arbre de transmission.

Selon un exemple, chaque boite de transmission comprend un chassis dans lequel un axe est monté, ledit axe comportant des moyens de couplage pour le couplage à l'arbre de transmission et au moteur.

Selon un exemple, chaque boite de transmission comprend un chassis dans lequel un premier axe et un second axe sont agencés et s'étendent parallèlement selon la même direction, le premier axe et le second axe sont mécaniquement couplés avec des éléments coupleurs, le premier axe et le second axe comprennent chacun des moyens de couplage pour être connecté, respectivement, à l'arbre de transmission et au bloc moteur.

Selon un exemple, une unique boite de transmission est agencée, cette boite de transmission est agencée pour que l'ensemble des arbres de transmissions y soit connecté.

Selon un exemple, ladite boite de transmission comprend un chassis dans lequel une pluralité d'axes s'étendant parallèlement selon la même direction est agencée, chaque axe comprenant des moyens de couplage pour être, chacun, connecté à un arbre de transmission et au bloc moteur.

Selon un exemple, ladite boite de transmission comprend un chassis dans lequel, pour chaque arbre de transmission, un premier axe et un second axe sont agencés et s'étendent parallèlement selon la même direction, le premier axe et le second axe sont mécaniquement couplés à des éléments coupleurs, le premier axe et le second axe comprennent chacun des moyens de couplage pour être connecté, respectivement, à l'arbre de transmission et au bloc moteur.

Selon un exemple, les moyens de couplage et/ou les éléments coupleurs comprennent au moins deux poulies fixées chacune à un axe, et liées une à une par une courroie.

Selon un exemple, les moyens de couplage et/ou les éléments coupleurs comprennent au moins deux pignons pour le couplage de deux axes entre eux.

Selon un exemple, les moyens de couplage et/ou les éléments coupleurs comprennent au moins deux pignons s'engrenant ensemble pour le couplage de deux axes entre eux.

Selon un exemple, les moyens de couplage et/ou les éléments coupleurs sont agencés pour permettre à un axe de sortie d'avoir une vitesse de rotation différente d'un axe d'entrée, préférentiellement pour avoir une vitesse de rotation supérieure.

### DESCRIPTION DES FIGURES

D'autres particularités et avantages ressortiront clairement de la description qui en est faite ci-après, à titre indicatif et nullement limitatif, en référence aux dessins annexés, dans lesquels:
- les fig. 1a et 1b sont des représentations schématiques d'une machine de fibrage selon l'art antérieur;
- la fig. 2, 3a, 3b et 3c sont des représentations schématiques d'une machine de fibrage selon l'invention;
- les fig. 4 à 8 sont des représentations schématiques de différents modes d'exécution du premier mode de réalisation de l'invention;
- les fig. 9 à 14 sont des représentations schématiques du second mode de réalisation de l'invention;

### DESCRIPTION DETAILLÉE DE L'INVENTION

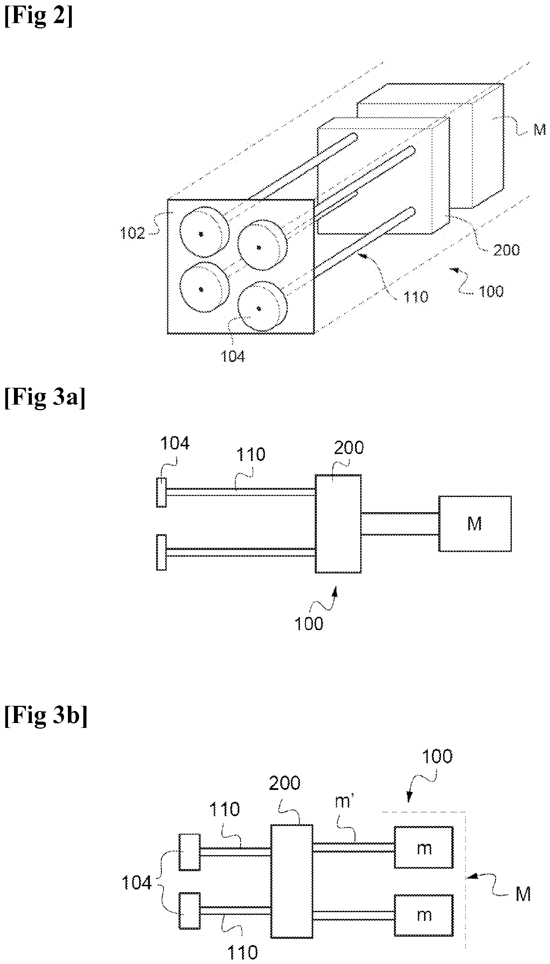

Aux figures 2 et 3a est représentée une machine de fibrage de laine minérale par centrifugation libre 100 selon l'invention. Une telle machine de fibrage de laine minérale par centrifugation libre 100 comprend un bâti 102 sur lequel les différents éléments sont montés.

Sur le bâti 102, une pluralité de broches ou roues de centrifugation ou rotors 104, au moins 3, préférentiellement trois ou quatre ou plus, sont agencés en cascade, et capables de tourner autour d'axes sensiblement horizontaux, deux roues 104 successives sur le trajet du matériau fondu tournant en sens inverse. La première roue de centrifugation 104 est alimentée en matériau fondu par une goulotte et sert essentiellement à accélérer le matériau qui est renvoyé vers la seconde roue de centrifugation 104 et ainsi de suite jusqu'à la dernière roue de centrifugation, le flux de matériau s'amenuisant à chaque roue de centrifugation 104 à raison de la quantité de fibres formées.

Une telle machine 100 comprend généralement en outre des moyens pour générer un courant d'air (non représenté) à la périphérie des roues de centrifugation dans le but d'assister la formation des fibres par un effet d'étirage et de prendre en charge la matière fibrée en la séparant de la matière infibrée (grenailles). Cette dernière est indésirable car elle contribue à alourdir le produit final et à rendre son toucher particulièrement désagréable. Le courant d'air a aussi pour fonction d'acheminer la matière fibrée vers un organe récepteur, par exemple une bande sans fin munie de caissons d'aspiration, qui transporte les fibres vers les dispositifs de traitement en aval de la ligne tels un nappeur, une étuve de polymérisation des liants, etc...

Le courant d'air est le plus souvent introduit dans une direction sensiblement parallèle aux axes de rotation des roues de centrifugation 104, et entraîne ainsi les fibres dans une direction perpendiculaire à leur direction de formation. La quantité de fibres fabriquées dépend du débit de matière déversée sur les roues de centrifugation 104 et de l'efficacité du fibrage par lesdites roues de centrifugation 104.

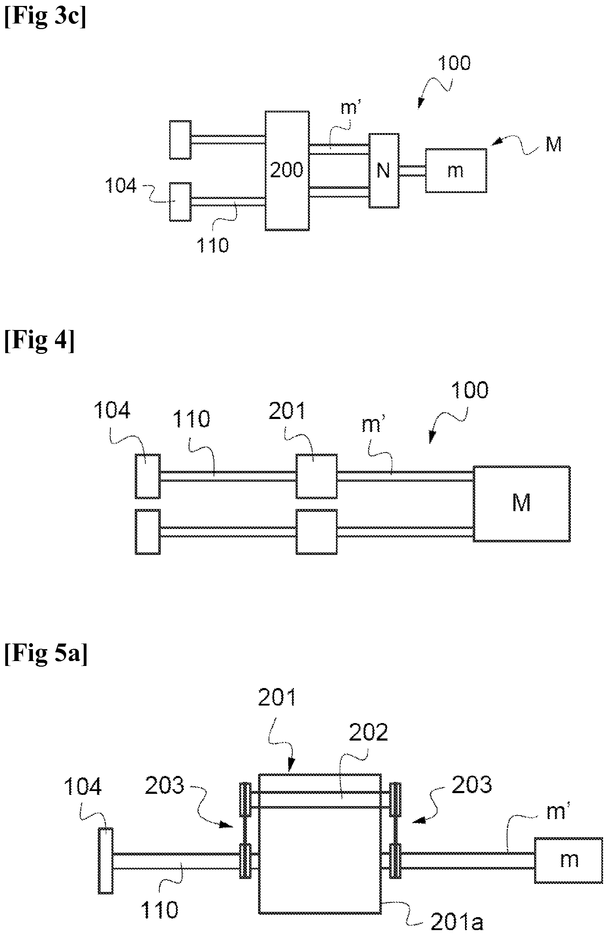

Les roues de centrifugation 104 sont connectées à un bloc moteur M pour leur mise en rotation. Chaque roue de centrifugation 104 est connectée à un arbre de transmission 110 permettant d'être relié au bloc moteur M. Sur la figure 3c, le bloc moteur M comprend, dans un premier cas, un seul moteur m associé à un bloc d'engrenages N pour permettre d'avoir plusieurs sorties m' et donc d'entrainer en rotation plusieurs roues de centrifugation 104. Dans un second cas, représenté sur la figure 3b, le bloc moteur M comprend plusieurs moteur m indépendants ayant chacun une sortie m'.

Les arbres de transmission 110 reliant les roues de centrifugation 104 au bloc moteur M peuvent être pleins ou creux. Dans le cas d'un arbre de transmission 110 creux, celui-ci pourra comprendre au moins une canalisation permettant le refroidissement des roues 104 et/ou une canalisation pour amener du liant jusqu'aux roues de centrifugation 104 pour la fabrication de la laine de roche.

Astucieusement selon l'invention, les arbres de transmission 110 ne sont pas engrainés directement avec le bloc moteur M. En effet, la machine 100 selon la présente invention comprend en outre des moyens de transmission intermédiaire 200 agencés entre le bloc moteur M et chaque arbre de transmission 110.

Dans un premier mode de réalisation visible à la figure 4, ces moyens de transmission intermédiaire 200 comprennent plusieurs boites de transmission intermédiaire 201, chaque boite de transmission intermédiaire 201 étant connectée avec un arbre de transmission 110. On comprend alors que, dans le cas d'un seul moteur m, les boites de transmission intermédiaire 201 sont toutes reliées aux sorties m' dudit moteur m alors que pour une machine de fibrage 100 ayant plusieurs moteurs, chaque boite de transmission intermédiaire 201 est connectée à la sortie m' d'un moteur m.

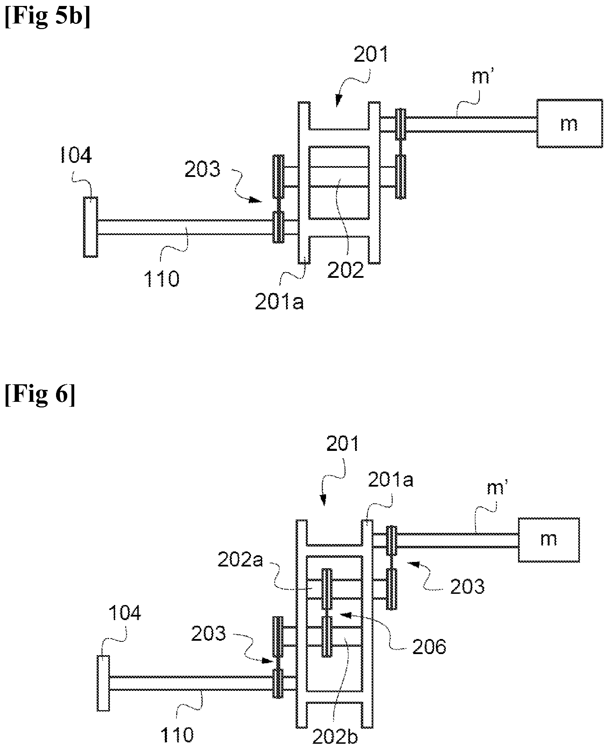

Dans une première exécution visible aux figures 5a et 5b, chaque boite de transmission intermédiaire 201 comprend un chassis 201a dans lequel un axe 202 comportant une première extrémité et une seconde extrémité est agencé. Ce chassis 201a peut être caréné (figure 5a) ou non (figure 5b). Ces extrémités sont agencées pour se trouver en dehors du chassis caréné ou non. L'axe 202 comprend, à ses extrémités, des moyens de couplage 203 pour son couplage avec l'arbre de transmission 110 et avec le bloc moteur M.

Un avantage de cette boite de transmission intermédiaire 201 selon l'invention est qu'elle permet un montage et démontage facilité par simple action sur les moyens de couplage 203 pour découpler ladite boite de transmission intermédiaire 201 du bloc moteur M et de l'arbre de transmission 110 sur lesquels elle est couplée. Ainsi, en cas de remplacement ou de maintenance, il est aisé d'avoir accès à cette boite de transmission intermédiaire 201. De même, en cas de maintenance à faire sur les roues de centrifugation 104, il est aisé de ne démonter que les roues de centrifugation 104 et les arbres de transmission 110 tout en gardant la boite de transmission intermédiaire 201 connectée au bloc moteur M.

Dans une seconde exécution visible à la figure 6, chaque boite de transmission 201 comprend un chassis 201a dans lequel deux axes 202a, 202b sont montés. Les axes 202a, 202b sont agencés pour s'étendre parallèlement selon la même direction. Le premier axe 202a et le second axe 202b sont agencés pour être mécaniquement couplés. Ce couplage est réalisé par des éléments coupleurs 206. Le premier axe 202a est agencé pour être couplé au moteur m alors que le second axe 202b est agencé pour être couplé à la roue de centrifugation 104.

Ces éléments coupleurs 206 comprennent un système à courroie comprenant une poulie sur l'axe 202a et une poulie sur l'axe 202b, une courroie reliant les deux poulies.

Alternativement, ces éléments coupleurs 206 comprennent un système à chaine comprenant une roue dentée sur l'axe 202a et une roue dentée sur l'axe 202b, une chaine reliant les deux roues dentées.

Alternativement, ces éléments coupleurs 206 comprennent un système à engrenage comprenant un pignon sur l'axe 202a et un pignon sur l'axe 202b. Les pignons sont engrenés l'un avec l'autre directement ou indirectement via d'autres pignons.

Le premier axe 202a et le second axe 202b comprennent également chacun des moyens de couplage 203 pour être connectés, respectivement, à l'arbre de transmission 110 et au bloc moteur M.

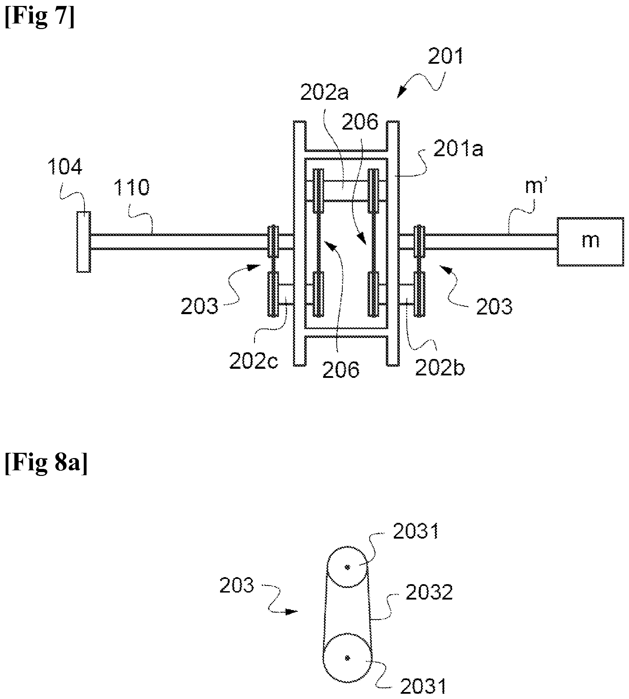

Dans une troisième exécution visible à la figure 7, chaque boite de transmission 201 comprend trois axes 202a, 202b, 202c. Les axes 202a, 202b, 202c sont agencés pour s'étendre parallèlement selon la même direction. Le premier axe 202a est agencé pour être mécaniquement relié avec le second axe 202b et le troisième axe 202c par l'intermédiaire d'éléments coupleurs 206. Des moyens de couplage 203 sont agencés pour connecter la boite de transmission 201 à l'arbre de transmission 110 et au bloc moteur M. Le second axe 202b est couplé au bloc moteur M et le troisième axe 202c est couplé à l'arbre de transmission 110.

Il est possible que les éléments coupleurs 206 permettent le couplage du premier axe 202a avec le second axe 202b soient différents des éléments coupleurs 206 permettent le couplage du premier axe 202a avec le troisième axe 202c.

L'avantage du second mode d'exécution et du troisième mode d'exécution est de permettre la présence de moyens de couplage 203 standards tout en permettant une augmentation de la vitesse de rotation.

En effet, la présence des éléments coupleurs 206 autorise la présence d'une démultiplication entre les axes 202a, 202b, 202c pour augmenter la vitesse de rotation de la roue de centrifugation 104 par rapport à la vitesse de rotation du moteur.

Cette possibilité permet de ne pas avoir de démultiplication au niveau des moyens de couplage 203. Ceux-ci peuvent donc être standards c'est-à-dire identiques pour chaque boite de transmission intermédiaire 201 d'une même machine de fibrage 100.

Par conséquent, non seulement, il est possible de garder un moteur m existant pour obtenir une vitesse de rotation plus élevée que ce qu'il ne peut fournir mais en plus, il est possible d'intervertir les boites de transmissions intermédiaires 201 entre les différents moteurs m selon les besoins.

Pour ces différentes exécutions du premier mode de réalisation, les moyens de couplage 203 peuvent comprendre un système à courroie comprenant une poulie 2031 sur l'axe 202 et une poulie 2031 sur l'arbre de transmission 110 ou sur une sortie m' du bloc moteur. Une courroie 2032 relie les deux poulies 2031 comme visible à la figure 8a.

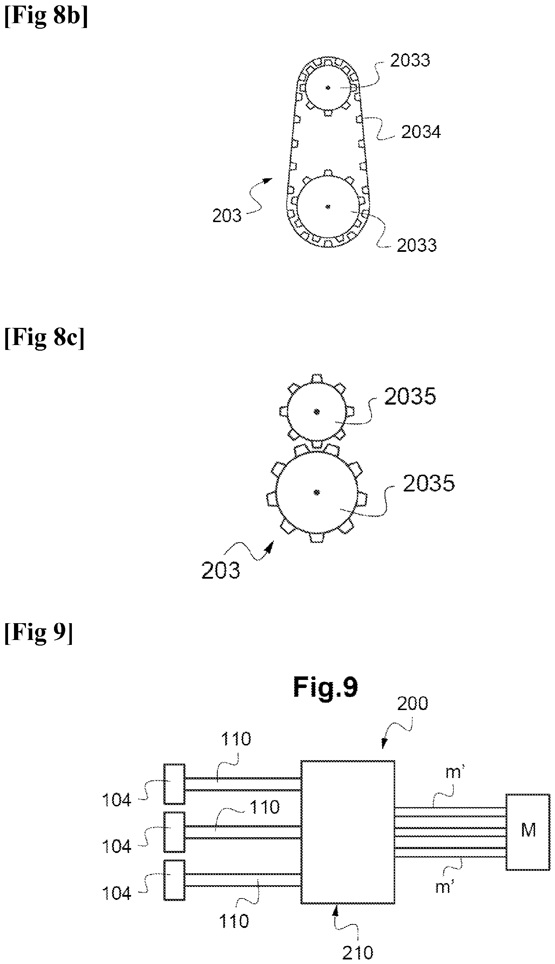

Alternativement, ces moyens de couplage 203 peuvent comprendre un système à chaine comprenant une roue dentée 2033 sur l'axe 202 et une roue dentée 2033 sur l'arbre de transmission 110 ou sur une sortie m' du bloc moteur. Une chaine ou courroie crantée 2034 relie les deux roues dentées comme visible à la figure 8b.

Alternativement, ces moyens de couplage 203 peuvent comprendre un système à engrenages comprenant un pignon 2035 sur l'axe 202 et un pignon 2035 sur l'arbre de transmission 110 ou sur une sortie m' du bloc moteur M. Les pignons 2035 sont engrenés l'un avec l'autre directement ou indirectement via d'autres pignons 2035 comme visible à la figure 8c.

Alternativement, l'arbre 110 peut être en prise directe avec l'axe 202 de la boite de transmission intermédiaire 200 via des vis ou des dents s'étendant dans la même direction que l'axe. Bien entendu, pour le premier mode d'exécution, les moyens de couplage 203 sont, optionnellement, agencés pour permettre une démultiplication augmentant la vitesse de la roue de centrifugation 104 par rapport à la vitesse du moteur m.

Cette boite de transmission intermédiaire 201 a également l'avantage de permettre à la roue de centrifugation 104 de ne pas être dans l'axe de l'axe moteur m'. Ainsi, il est possible de positionner les roues de centrifugation 104 à souhait.

Dans un second mode de réalisation visible aux figures 9 à 11, la machine de fibrage 100 selon la présente invention comprend des moyens de transmission intermédiaire 200 agencés pour que la totalité des arbres de transmission 110 y soit connectée. Pour cela, les moyens de transmission intermédiaire 200 comprennent une unique boite de transmission intermédiaire 210.

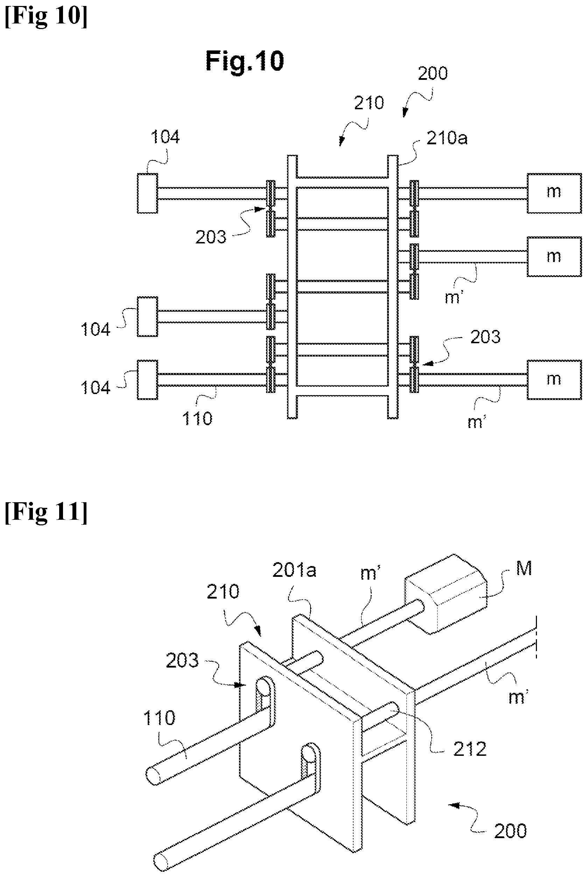

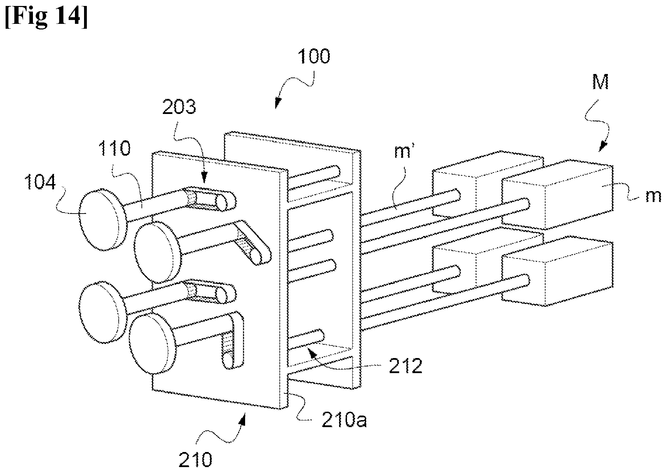

Dans un premier mode d'exécution de ce second mode de réalisation, cette unique boite de transmission intermédiaire 210 comprend un chassis 210a dans lequel une pluralité d'axes 212 est agencée. Le nombre d'axes 212 est égal au nombre de roues 104. Ainsi, chaque axe 212 comprend des moyens de couplage 203 pour être couplé au bloc moteur M et aux roues de centrifugation 104 comme visible aux figures 10, 11 et 14.

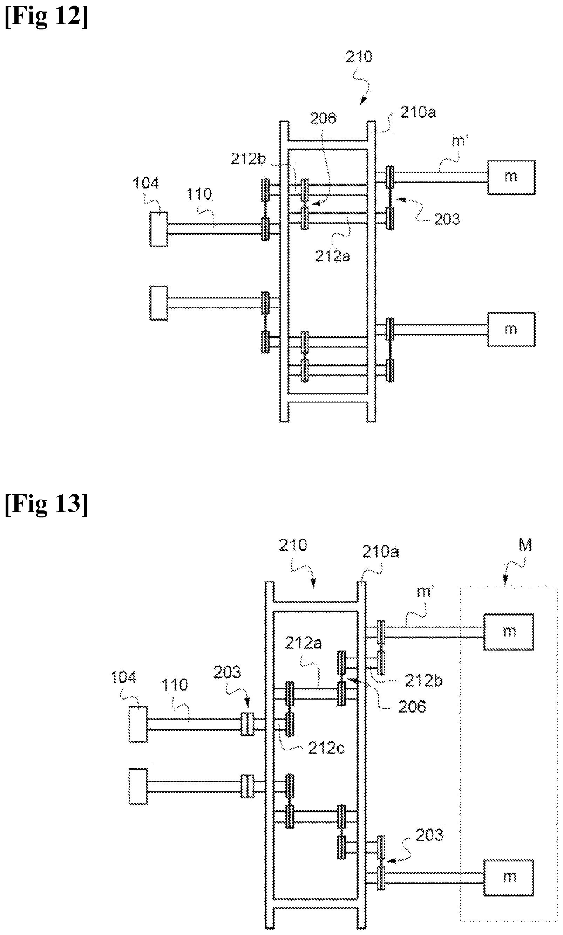

Dans un second mode d'exécution à ce second mode de réalisation visible à la figure 12, chaque axe 212 est remplacé par deux axes 212a, 212b agencés pour s'étendre parallèlement selon la même direction. Le premier axe 212a et le second axe 212b sont agencés pour être mécaniquement couplés par des éléments coupleurs 206. Le premier axe 212a est agencé pour être couplé au moteur m alors que le second axe 212b est agencé pour être couplé à la roue de centrifugation 104.

Dans un troisième mode d'exécution à ce second mode de réalisation visible à la figure 13, chaque boite de transmission 210 comprend trois axes 212a, 212b, 212c. Les axes 212a, 212b, 212c sont agencés pour s'étendre parallèlement selon la même direction. Le premier axe 212a est agencé pour être mécaniquement avec le second axe 212b et le troisième axe 212c par l'intermédiaire d'éléments coupleurs 206. Le second axe 212b est couplé au bloc moteur M par des moyens de couplage 203. Le troisième axe 212c est couplé à l'arbre de transmission 110 par des moyens de couplage 203. Dans le cas de la figure 13, les moyens de couplage 203 couplant l'arbre de transmission 110 à la boite de transmission 210 sont simplement un boulonnage dudit arbre 110 à l'axe 212c de la boite de transmission 210.

Pour ces différentes exécutions du second mode de réalisation, les moyens de couplage 203 peuvent comprendre un système à courroie comprenant une poulie sur l'axe 202 et une poulie sur l'arbre de transmission 110 ou sur une sortie m' du bloc moteur. Une courroie relie les deux poulies.

Alternativement, ces moyens de couplage 203 peuvent comprendre un système à chaine comprenant une roue dentée sur l'axe 202 et une roue dentée sur l'arbre de transmission 110 ou sur une sortie m' du bloc moteur. Une chaine relie les deux roues dentées.

Alternativement, ces moyens de couplage 203 peuvent comprendre un système à engrenage comprenant un pignon sur l'axe 202 et un pignon sur l'arbre de transmission 110 ou sur une sortie m' du bloc moteur M. Les pignons sont engrenés l'un avec l'autre directement ou indirectement via d'autres pignons.

Alternativement, l'arbre 110 peut être en prise directe avec l'axe de la boite de transmission intermédiaire 200 via des vis ou des dents s'étendant dans la même direction que l'axe.

Bien entendu, dans une variante des différents modes d'exécution, les moyens de couplage 203 ou les éléments coupleurs 206 sont agencés pour permettre de modifier la vitesse entre un axe d'entrée, connecté directement ou indirectement au bloc moteur M, et un axe de sortie connecté directement ou indirectement à la roue de centrifugation 104. Cette variation de la vitesse de rotation est obtenue en modifiant l'engrenage ou les poulies ou les roues dentées formant des éléments coupleurs 206 et/ou les moyens de couplage 203 pour obtenir une démultiplication.

Dans le cas de moyens de couplage 203 et/ou d'éléments coupleurs 206 comprenant des poulies reliées par une courroie, la poulie de l'axe de sortie sera de plus faible diamètre que celle de l'axe d'entrée.

Dans le cas de moyens de couplage 203 et/ou d'éléments coupleurs 206 comprenant des roues dentées reliées par une chaine, la roue dentée de l'axe de sortie sera de plus faible diamètre et aura moins de dents que celle de l'axe d'entrée.

Dans le cas de moyens de couplage 203 et/ou d'éléments coupleurs 206 comprenant un engrenage comprenant au moins deux pignons engrenés l'un avec l'autre, le pignon de l'axe de sortie sera de plus faible diamètre et aura moins de dents que celui de l'axe d'entrée.

Cette variante permet avantageusement de pouvoir augmenter la vitesse de rotation des rotors/roues de centrifugation 104 sans nécessité un bloc moteur M plus performants. Il devient aisé de modifier les moyens de couplage 203 ou les éléments coupleurs 206 pour s'adapter à la vitesse de rotation souhaitée.

De plus, avoir des boites de transmission intermédiaire 210 avec des moyens de couplage 203 identiques permet avantageusement de standardiser ces pièces qui tendent à s'user. Par conséquent, cette standardisation apporte un avantage en termes de maintenance car il n'y a qu'un seul modèle de boite de transmission intermédiaire 210.

Dans une variante des modes de réalisation, l'arbre de transmission 110 est composé de deux demi-arbres. Ces demi-arbres sont connectés l'un à l'autre par des éléments de couplage pouvant être une courroie associé à deux poulies ou une chaine associée à deux roues dentées ou deux pignons s'engrainant l'un l'autre. Un premier demi-arbre est connecté à la boite de transmission intermédiaire alors que le second demi-arbre est connecté à la roue de centrifugation 104 utilisée pour le fibrage.

Cette variante permet avantageusement d'avoir des boites de transmission intermédiaire 201, 210 standards et d'opérer une augmentation de la vitesse de rotation du rotor associé. En effet, les éléments de couplage sont conçus pour que le second demi arbre connecté à la roue de centrifugation 104 présente une vitesse de rotation supérieure à la vitesse de rotation du premier demi arbre connecté à la boite de transmission intermédiaire 201, 210. Cela est possible en configurant les poulies ou les roues dentées ou les pignons pour que la poulie ou la roue dentée ou le pignon installé sur le second demi arbre soit plus petit que la poulie ou la roue dentée ou le pignon installé sur le premier demi arbre. Dans le cas de la roue dentée ou du pignon, cette diminution de la taille s'accompagne d'une diminution du nombre de dents.

Bien entendu, la présente invention ne se limite pas à l'exemple illustré mais est susceptible de diverses variantes et modifications qui apparaîtront à l'homme de l'art.

Ainsi, il est possible de concevoir les boites de transmissions intermédiaires 201, 210 pour que les moyens de couplage 203 et/ou les éléments coupleurs 206 soient de natures différentes.

## Revendications

1. Machine de fibrage de laine minérale par centrifugation libre (100) comprenant un bâti (102) sur lequel est montée au moins une roue de centrifugation (104) , ladite roue de centrifugation étant connectée à un arbre de transmission (110) destinée à la mettre en rotation en transmettant le mouvement de rotation d'un axe de sortie d'un bloc moteur (M), **caractérisée en ce que** ladite machine comprend en outre au moins une boite de transmission intermédiaire (201, 210) connectée au moins par une entrée à un axe de sortie du bloc moteur (M) et par au moins une sortie à un arbre de transmission (110), ladite boite de transmission intermédiaire étant agencée pour transmettre le mouvement de rotation de l'axe moteur à l'arbre de transmission.

2. Machine de fibrage selon la revendication 1, comprenant une pluralité de roues de centrifugation (104), chaque roue de centrifugation étant connectée à un arbre de transmission, et comprenant une boite de transmission intermédiaire (201) pour chaque arbre de transmission.

3. Machine de fibrage selon la revendication 2, dans laquelle chaque boite de transmission (201) comprend un chassis (201a) dans lequel un axe (202) est monté, ledit axe comportant des moyens de couplage (203) pour le couplage à l'arbre de transmission et au moteur.

4. Machine de fibrage selon la revendication 2, dans laquelle chaque boite de transmission (201) comprend un chassis (201a) dans lequel un premier axe (202a) et un second axe (202b) sont agencés et s'étendent parallèlement selon la même direction, le premier axe (202a) et le second axe (202b) sont mécaniquement couplés à des éléments coupleurs (206), le premier axe (202a) et le second axe (202b) comprennent chacun des moyens de couplage (203) pour être connecté, respectivement, à l'arbre de transmission (110) et au bloc moteur (M).

5. Machine de fibrage selon la revendication 1, dans laquelle une unique boite de transmission (210) est agencée, cette boite de transmission (210) est agencée pour que l'ensemble des arbres de transmissions y soit connecté.

6. Machine de fibrage selon la revendication 5, dans ladite boite de transmission (210) comprend un chassis (210a) dans lequel une pluralité d'axes (212) s'étendant parallèlement selon la même direction est agencée, chaque axe (212) comprenant des moyens de couplage (203) pour être, chacun, connecté à un arbre de transmission (110) et au bloc moteur (M).

7. Machine de fibrage selon la revendication 5, dans laquelle ladite boite de transmission (210) comprend un chassis (210a) dans lequel, pour chaque arbre de transmission, un premier axe (202a) et un second axe (202b) sont agencés et s'étendent parallèlement selon la même direction, le premier axe (202a) et le second axe (202b) sont mécaniquement couplés à des éléments coupleurs (206), le premier axe (202a) et le second axe (202b) comprennent chacun des moyens de couplage (203) pour être connecté, respectivement, à l'arbre de transmission (110) et au bloc moteur (M).

8. Machine de fibrage selon l'une des revendications 3 à 7, dans laquelle les moyens de couplage (203) et/ou les éléments coupleurs (206) comprennent au moins deux poulies fixées chacune à un axe, et liées une à une par une courroie.

9. Machine de fibrage selon l'une des revendications 3 à 7, dans laquelle les moyens de couplage (203) et/ou les éléments coupleurs (206) comprennent au moins deux pignons pour le couplage de deux axes entre eux.

10. Machine de fibrage selon l'une des revendications 3 à 7, dans laquelle les moyens de couplage (203) et/ou les éléments coupleurs (206) comprennent au moins deux pignons s'engrenant ensemble pour le couplage de deux axes entre eux.

11. Machine de fibrage selon l'une des revendications 8 à 10, dans laquelle les moyens de couplage (203) et/ou les éléments coupleurs (206) sont agencés pour permettre à un axe de sortie d'avoir une vitesse de rotation différente de celle d'un axe d'entrée, préférentiellement pour avoir une vitesse de rotation supérieure.

## Patentansprüche

1. Zerfaserungsmaschine für Mineralwolle durch freies Zentrifugieren (100), umfassend ein Gestell (102), auf dem mindestens ein Schleuderrrad (104) angebracht ist, wobei das Schleuderrad mit einer Gelenkwelle (110) verbunden ist, die bestimmt ist, sie bei Übertragen der Drehbewegung einer Ausgangsachse eines Motorblocks (M) zu drehen, **dadurch gekennzeichnet, dass** die Maschine ferner mindestens ein Zwischengetriebe (201, 210) umfasst, das mindestens durch einen Eingang mit einer Ausgangsachse des Motorblocks (M) und durch mindestens einen Ausgang mit einer Gelenkwelle (110) verbunden ist, wobei das Zwischengetriebe angeordnet ist, um die Drehbewegung der Motorachse an die Gelenkwelle zu übertragen.

2. Zerfaserungsmaschine nach Anspruch 1, umfassend eine Vielzahl von Schleuderrädern (104), wobei jedes Schleuderrad mit einer Gelenkwelle verbunden ist und ein Zwischengetriebe (201) für jede Gelenkwelle umfasst.

3. Zerfaserungsmaschine nach Anspruch 2, wobei jedes Getriebe (201) ein Gestell (201a) umfasst, in dem eine Achse (202) angebracht ist, wobei die Achse Kopplungsmittel (203) zum Koppeln an die Gelenkwelle und an den Motor aufweist.

4. Zerfaserungsmaschine nach Anspruch 2, wobei jedes Getriebe (201) ein Gestell 201a) umfasst, in dem eine erste Achse (202a) und eine zweite Achse (202b) angeordnet sind und sich parallel entlang der gleichen Richtung erstrecken, wobei die erste Achse (202a) und die zweite Achse (202b) mit Kopplerelementen (206) mechanisch gekoppelt sind, wobei die erste Achse (202a) und die zweite Achse (202b) jeweils Kopplungsmittel (203) umfassen, um mit der Gelenkwelle (110) beziehungsweise mit dem Motorblock (M) verbunden zu sein.

5. Zerfaserungsmaschine nach Anspruch 1, wobei ein einzelnes Getriebe (210) angeordnet ist, wobei dieses Getriebe (210) angeordnet ist, damit die Gesamtheit der Gelenkwellen dort verbunden ist.

6. Zerfaserungsmaschine nach Anspruch 5, wobei das Getriebe (210) ein Gestell (210a) umfasst, in dem eine Vielzahl von Achsen (212), die sich parallel entlang der gleichen Richtung erstrecken, angeordnet ist, wobei jede Achse (212) Kopplungsmittel (203) umfasst, um jeweils mit einer Gelenkwelle (110) und mit dem Motorblock (M) verbunden zu sein.

7. Zerfaserungsmaschine nach Anspruch 5, wobei das Getriebe (210) ein Gestell (210a) umfasst, in dem für jede Gelenkwelle eine erste Achse (202a) und eine zweite Achse (202b) angeordnet sind und sich parallel entlang der gleichen Richtung erstrecken, wobei die erste Achse (202a) und die zweite Achse (202b) mit Kopplerelementen (206) mechanisch gekoppelt sind, wobei die erste Achse (202a) und die zweite Achse (202b) jeweils Kopplungsmittel (203) umfassen, um mit der Gelenkwelle (110) beziehungsweise mit dem Motorblock (M) verbunden zu sein.

8. Zerfaserungsmaschine nach einem der Ansprüche 3 bis 7, wobei die Kopplungsmittel (203) und/oder die Kopplerelemente (206) mindestens zwei Scheiben umfassen, die jeweils an einer Achse befestigt sind und eine nach der anderem mit einem Riemen festgebunden sind.

9. Zerfaserungsmaschine nach einem der Ansprüche 3 bis 7, wobei die Kopplungsmittel (203) und/oder die Kopplerelemente (206) mindestens zwei Ritzel für die Kopplung von zwei Achsen miteinander umfassen.

10. Zerfaserungsmaschine nach einem der Ansprüche 3 bis 7, wobei die Kopplungsmittel (203) und/oder die Kopplerelemente (206) mindestens zwei Ritzel, die ineinandergreifen, für die Kopplung von zwei Achsen miteinander umfassen.

11. Zerfaserungsmaschine nach einem der Ansprüche 8 bis 10, wobei die Kopplungsmittel (203) und/oder die Kopplerelemente (206) angeordnet sind, um zu ermöglichen, dass eine Ausgangsachse eine unterschiedliche Drehgeschwindigkeit als die einer Eingangsachse vorweist, vorzugsweise, um eine höhere Drehgeschwindigkeit vorzuweisen.

## Claims

1. A machine (100) for fiberizing mineral wool by free centrifugation, comprising a frame (102) on which is mounted at least one centrifugation wheel (104), said centrifugation wheel being connected to a transmission shaft (110) designed to rotate it by transmitting the movement of rotation of an output rod of a drive unit (M), **characterized in that** said machine further comprises at least one intermediary transmission box (201, 210) connected at least by one input to an output rod of the drive unit (M) and by at least one output to a transmission shaft (110), said intermediary transmission box being arranged such as to transmit the movement of rotation of the drive rod to the transmission shaft.

2. The fiberizing machine as claimed in claim 1, comprising a plurality of centrifugation wheels (104), each centrifugation wheel being connected to a transmission shaft and comprising an intermediary transmission box (201) for each transmission shaft.

3. The fiberizing machine as claimed in claim 2, wherein each transmission box (201) comprises a chassis (201a) in which a rod (202) is mounted, said rod comprising coupling means (203) for coupling to the transmission shaft and to the drive.

4. The fiberizing machine as claimed in claim 2, wherein each transmission box (201) comprises a chassis (201a) in which a first rod (202a) and a second rod (202b) are arranged and extend in parallel in the same direction, the first rod (202a) and the second rod (202b) are mechanically coupled to coupling elements (206), the first rod (202a) and the second rod (202b) each comprise coupling means (203) in order to be connected, respectively, to the transmission shaft (110) and to the drive unit (M).

5. The fiberizing machine as claimed in claim 1, wherein a single transmission box (210) is arranged, and this transmission box (210) is arranged such that all the transmission shafts are connected thereto.

6. The fiberizing machine as claimed in claim 5, in said transmission box (210) comprises a chassis (210a) in which a plurality of rods (212) extending in parallel in the same direction is arranged, each rod (212) comprising coupling means (203) in order for each one to be connected to a transmission shaft (110) and to the drive unit (M).

7. The fiberizing machine as claimed in claim 5, wherein said transmission box (210) comprises a chassis (210a) in which, for each transmission shaft, a first rod (202a) and a second rod (202b) are arranged and extend in parallel in the same direction, the first rod (202a) and the second rod (202b) are mechanically coupled to coupling elements (206), the first rod (202a) and the second rod (202b) each comprise coupling means (203) in order to be connected, respectively, to the transmission shaft (110) and to the drive unit (M).

8. The fiberizing machine as claimed in one of claims 3 to 7, wherein the coupling means (203) and/or the coupling elements (206) comprise at least two pulleys each fixed to a rod and connected in pairs by a belt.

9. The fiberizing machine as claimed in one of claims 3 to 7, wherein the coupling means (203) and/or the coupling elements (206) comprise at least two pinions for coupling two rods together.

10. The fiberizing machine as claimed in one of claims 3 to 7, wherein the coupling means (203) and/or the coupling elements (206) comprise at least two pinions meshing together for coupling two rods together.

11. The fiberizing machine as claimed in one of claims 8 to 10, wherein the coupling means (203) and/or the coupling elements (206) are arranged such as to allow an output rod to have a speed of rotation that is different from that of an input rod, preferably such as to have a higher speed of rotation.
